# EUROPEAN PATENT APPLICATION

(11) **EP 4 830 789 A1**
(43) Date of publication of application: **28.10.2026**
(21) Application number: 25171977.9
(22) Date of filing: 23.04.2025
(51) Int. Cl.: A62B 7/04, A62B 9/02, A62B 27/00, B63C 11/22

(54) **PRESSURE SETTING**

(71) Applicant: Dräger Safety AG & Co. KGaA, 23560 Lübeck (DE)
(72) Inventor: LAGEAT, Emilie, Morpeth, NE61 5BB (GB); FARNABY, James, Newcastle upon Tyne, NE3 5QL (GB)
(74) Representative: Haseltine Lake Kempner LLP

(57) **Abstract**

There is disclosed, a method (200) for setting an outlet pressure of a first stage pressure reducer (10) to a predetermined pressure at a predetermined flow rate, the first stage pressure reducer (10) comprising a pressure reduction mechanism and an adjustable biasing apparatus configured to adjustably apply a biasing force to the pressure reduction mechanism to vary the outlet pressure of the first stage pressure reducer (10), the method (200) comprising: supplying (210) an inlet gas flow to the first stage pressure reducer (10); restricting (220) an outlet gas flow of the first stage pressure reducer (10) to the predetermined pressure at the predetermined flow rate; measuring (230) an inlet flow rate of the inlet gas flow; and adjusting (240), by the adjustable biasing apparatus, the outlet pressure of the first stage pressure reducer (10) until the measured inlet flow rate meets the predetermined flow rate. Also disclosed is a first stage pressure reducer (10).

## Description

### Technical Field

The present disclosure relates to methods for setting an outlet pressure of a pressure reducer and, more specifically, to methods for setting an outlet pressure of a first stage pressure reducer to a predetermined pressure at a predetermined flow rate.

### Background

Self-contained breathing apparatus (SCBA) products are typically used by fire fighters to provide safe breathing gas in environments which are immediately dangerous to life and health (IDLH). Typical SCBA products have a high-pressure system which includes a breathing gas tank at a nominal pressure of around 300-400 bar. The high-pressure system is connected to a medium-pressure system via a first stage pressure reduction device (first stage pressure reducer). Such devices output breathing gas from the high-pressure system into the medium pressure system at a lower pressure of around 7-8 bar. This medium pressure breathing gas may then pass through a second stage pressure reduction device to further reduce the pressure to a level suitable for a user to breathe.

Manufacturing tolerances and variations mean each first stage pressure reducer produced must be individually adjusted to ensure the first stage pressure reducer outputs breathing gas at the required pressure. This process of individually adjusting each first stage pressure reducer can be time consuming. Therefore, it will be appreciated that improvements in this regard are desirable.

### Summary

According to a first aspect, there is provided a method for setting an outlet pressure of a first stage pressure reducer. The method may be for setting an outlet pressure of a first stage pressure reducer to a predetermined pressure at a predetermined flow rate. The first stage pressure reducer may comprise a pressure reduction mechanism and an adjustable biasing apparatus. The adjustable biasing apparatus may be configured to adjustably apply a biasing force to the pressure reduction mechanism to vary the outlet pressure of the first stage pressure reducer. The method may comprise: supplying an inlet gas flow to the first stage pressure reducer; restricting an outlet gas flow of the first stage pressure reducer to the predetermined pressure at the predetermined flow rate; measuring an inlet flow rate of the inlet gas flow; and adjusting, by the adjustable biasing apparatus, the outlet pressure of the first stage pressure reducer until the measured inlet flow rate meets the predetermined flow rate.

The method may be a computer-implemented method.

The method may be a method of setting an outlet pressure of a first stage pressure reducer to a predetermined pressure at a predetermined flow rate.

The first stage pressure reducer may be a first stage pressure reducer of a breathing apparatus. It will therefore be understood that the first stage pressure reducer may be a first pressure reducer of two or more pressure reducers of a breathing apparatus.

The first stage pressure reducer may reduce breathing gas at a high pressure to an intermediate pressure. Breathing gas may be stored in a breathing gas cylinder of a breathing apparatus at a high pressure. For example, a high pressure may be between 300 bar and 400 bar.

Breathing gas at the intermediate pressure may be supplied to a second stage pressure reducer such as a demand regulator for further pressure reduction. The demand regulator may reduce breathing gas at the intermediate pressure to a low pressure suitable to be breathed by a user.

The intermediate pressure may be between 5 bar and 10 bar, for example 6 bar, 7 bar, 8 bar, or 9 bar. The low pressure may be atmospheric pressure or slightly above atmospheric pressure.

The adjustable biasing apparatus may comprise a spring configured to apply the biasing force to the pressure reduction mechanism; and a threaded element configured to adjust a working length of the spring to adjust the biasing force applied to the pressure reduction mechanism.

Increasing the working length of the spring may decrease the outlet pressure. Decreasing the working length of the spring may increase the outlet pressure.

A measured flow rate meeting the predetermined flow rate may refer to the measured flow rate falling within a specified range of the predetermined flow rate. The measured flow rate meeting the predetermined flow rate may refer to the measured flow rate being between an upper bound and a lower bound of the predetermined flow rate. For example, if the predetermined flow rate is 320 SLM, the upper bound may be 325 SLM and the lower bound may be 315 SLM.

Adjusting the outlet pressure of the first stage pressure reducer may comprise rotating the threaded element to adjust the biasing force applied to the pressure reduction mechanism.

The threaded element may be a grub screw or a setting screw. The threaded element may comprise a recess for receiving a tool for rotating the threaded element. The threaded element may be received in an end cap of the first stage pressure reducer. The threaded element may be rotated to adjust a protrusion distance of the threaded element from the end cap.

The method may comprise an initial step of applying a thread-locking fluid to the threaded element to prevent movement of the threaded element once the outlet pressure of the first stage pressure reducer is adjusted.

The thread-locking fluid may be applied to threads of the threaded element before the threaded element is threaded into the end cap of the first stage pressure reducer.

The outlet gas flow may be restricted by a restricting orifice. The restricting orifice may be said to be 'downstream' of the first stage pressure reducer.

The restricting orifice may restrict the outlet gas flow of the first stage pressure reducer to 320 SLM at a pressure of 6.55 bar. The restricting orifice may comprise a cross-sectional area of around 4.5 mm².

A flow meter may be arranged between a source of the inlet gas flow and the inlet of the first stage pressure reducer to measure the inlet flow rate of the inlet gas flow.

The flow meter may be arranged 'up stream' of the first stage pressure reducer.

The method may comprise measuring an outlet pressure of the outlet gas flow; and adjusting, by the adjustable biasing apparatus, the outlet pressure of the first stage pressure reducer until the outlet pressure meets the predetermined pressure.

The outlet pressure may be measured by a pressure sensor arranged downstream of the first stage pressure reducer.

The method may comprise measuring the inlet flow rate a predetermined period of time after the inlet gas flow is first supplied to the first stage pressure reducer. The predetermined period of time may be at least 5 seconds.

The predetermined period of time may be referred to as a 'settling time'. In other words, the inlet flow rate may be measured after the inlet gas flow has settled for a set period of time after starting to be supplied to the first stage pressure reducer.

The inlet gas flow may be supplied to the first stage pressure reducer at a constant pressure. The inlet gas flow may be supplied at 20 bar.

The inlet gas flow may be supplied to the inlet of the first stage pressure reducer at a constant temperature. The inlet gas flow may be supplied at 25°C.

The inlet gas flow may be treated by a temperature controller prior to being supplied to the inlet of the first stage pressure reducer. The temperature controller may be a heater. The inlet gas flow may be heated to a predetermined temperature.

The predetermined pressure may be between 6 bar and 7 bar. The predetermined pressure may be between 6.5 bar and 6.6 bar. The predetermined flow rate may be between 300 SLM and 400 SLM. The predetermined flow rate may be between 315 SLM and 325 SLM.

The predetermined pressure may be an intermediate pressure. The predetermined pressure may be a nominal or operating pressure that the first stage pressure reducer is intended to reduce the inlet gas flow to.

The pressure reduction mechanism may comprise a plunger and a piston. The piston may be displaceable between an open position in which a flow path is formed between the piston and the plunger, and a closed position in which the piston engages the plunger to prevent flow therebetween.

A position of the plunger may be moveable relative to an end cap of the first stage pressure reducer by the adjustable biasing apparatus.

According to a second aspect, there is provided a first stage pressure reducer comprising a pressure reduction mechanism having an outlet pressure set according to the method of the first aspect.

According to a third aspect, there is provided a computer programme which, when run on a computer, causes the computer to execute the method of the first aspect.

According to a fourth aspect, there is provided a pressure setting system comprising: an adjustment mechanism configured to engage an adjustable biasing apparatus of a first stage pressure reducer according to the third aspect; a flow meter configured to measure an inlet flow rate of the first stage pressure reducer; and a processor configured to receive data from the flow meter corresponding to the inlet flow rate and actuate the adjustment mechanism to adjust the adjustable biasing apparatus until the received data corresponds to an inlet flow rate that meets a predetermined flow rate.

### Brief Description of the Drawings

Arrangements of the invention will now be described, by way of example, and with reference to the accompanying drawings, in which:
Figure 1 shows a cross-sectional view of a first stage pressure reducer;
Figures 2A and 2B show cross-sectional views of a first stage pressure reducer;
Figure 3 shows breathing waveform on a pressure-time graph;
Figure 4 schematically shows an existing pressure setting arrangement;
Figure 5 shows a flowchart of a method according to an embodiment; and
Figure 6 schematically shows a pressure setting arrangement according to an embodiment.

### Detailed Description of the Drawings

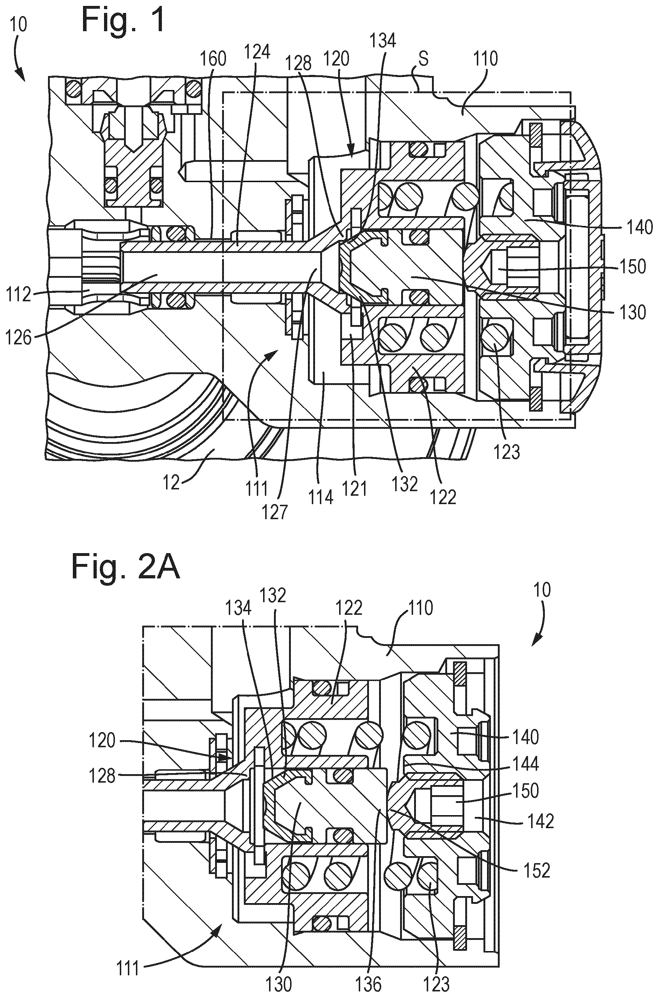

With reference to **Figure 1****,** an example of a first stage pressure reducer 10 is shown. The first stage pressure reducer 10 comprises a body 110 which defines a cavity 111. The cavity 111 has a higher-pressure region 112, a lower-pressure region 114 and a piston bore 160. The higher-pressure region 112 and lower-pressure region 114 are fluidly connected by the piston bore 160. The body 110 connects to a pressurised breathing gas supply such as a pressurised breathing gas tank 12 via a connector (not shown) which enables the higher-pressure region 112 to receive higher-pressure breathing gas from the tank 12. The lower-pressure region 114 is configured to receive lower-pressure breathing gas from the higher-pressure region 112 via the piston bore 160. The lower-pressure breathing gas is generally at a lower pressure than the higher-pressure breathing gas but at a higher pressure than user-deliverable breathing gas. This breathing gas may be referred to as either intermediate-pressure breathing gas or lower-pressure breathing gas.

Typically, the breathing gas inside the tank 12 and therefore the higher-pressure region is pressurised to between 100 and 400 bar, often around 300-400 bar. Before the lower-pressure region 114 receives this breathing gas, the pressure of the breathing gas must be reduced.

A piston 120, comprising a head 122 and a tail 124, is disposed inside the body 110. The piston head 122 is located primarily inside the lower-pressure region 114, while the piston tail 124 is located primarily inside the higher-pressure region 112 and the piston bore 160.

The piston 120 is used to reduce the pressure of the higher-pressure breathing gas as the breathing gas enters the lower-pressure region 114, thereby providing the lower-pressure region 114 with lower-pressure (intermediate-pressure) breathing gas. Starting from an "open" position of the piston 120, higher-pressure breathing gas flows from the higher-pressure region 112 through an internal bore 126 of the piston tail 124 and into the piston head 122, where the gas enters the lower-pressure region 114 via an outlet 121 in the piston head 122. The introduction of this higher-pressure gas causes the pressure in the lower-pressure region 114 to increase and begin to push on the piston head 122, causing the piston 120 to move in a way that expands the volume of the lower-pressure region 114. From the perspective of Figure 1, the piston 120 moves leftward in a direction away from the higher-pressure region 112. Resultingly, the spring 123 is compressed until a sealing point 134 on the distal sealing end 132 of a plunger 130 seals against a corresponding sealing seat 128 at a neck 127 of the internal bore 126, thereby blocking the neck 127 at an interface between the internal bore 126 and the head 122. The spring 123 applies a biasing force to the piston 120

Once the neck 127 is blocked, the higher-pressure breathing gas in the higher-pressure region 112 is prevented from flowing through the internal bore 126, into the lower-pressure region 114. This state corresponds to a "closed" position of the piston 120. As the user consumes the breathing gas in the lower-pressure region 114 (via a second stage pressure reducer and/or a demand regulator, not shown) the pressure inside the lower-pressure region 114 drops, causing the force acting on the piston head 122 to reduce. The spring 123 therefore returns the piston 120 back to the "open" position, thus resetting the position of the piston 120. The combination of the piston 120 and the plunger 130 together define a pressure reduction mechanism of the first stage pressure reducer.

The movement between the open and closed positions repeats according to user breathing gas demand, causing the piston 120 to move reciprocally through the piston bore 160, for as long as there is sufficient breathing gas in the tank 12. In particular, the tail 124 moves reciprocally through the piston bore 160 while the head 122 moves reciprocally inside the lower-pressure region 114. The discrete transfer of higher-pressure gas from the higher-pressure region 112 to the lower-pressure region 114, where the higher-pressure gas is able to expand (and thereby decrease in pressure), is what results in the controlled pressure reduction of the breathing gas.

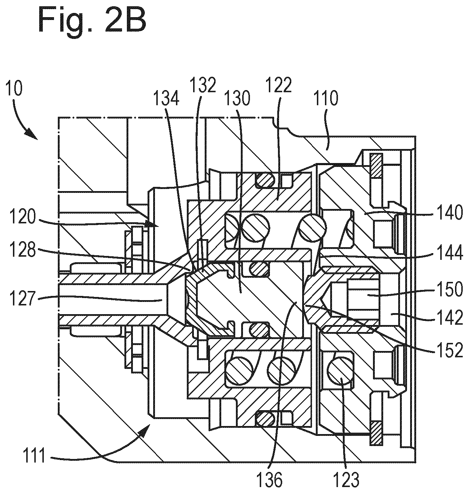

Figures 2A and 2B show an enlarged view (marked as "S" in Figure 1) of the piston head 122 and the plunger 130. Turning to Figure 2A, an end cap 140 is provided in the body 110, opposite the piston head 122, closing an opening of the body 110. The first stage pressure reducer comprises an adjustable biasing apparatus. The adjustable biasing apparatus takes the form of a setting screw 150 provided in a threaded through-hole 142 inside the end cap 140. However, in other embodiments, a different form of adjustable biasing apparatus may be applicable. The setting screw 150 can be rotated to adjust the distance a distal end 152 of the setting screw 150 extends from a face 144 of the end cap 140. The distal end 152 contacts the plunger 130 at a proximal end 136. Therefore, the extension distance of the distal end 152 from the end cap face 144 determines a minimum distance between the proximal end 136 of the plunger 130 and the end cap face 144, which is an internally-facing face of the end cap. It follows that this extension distance also determines the minimum distance between the sealing point 134 of the distal sealing end 132 of the plunger 130 and the end cap face 144 (as the plunger 130 is of substantially constant length).

In routine operation, adjusting the adjustable biasing apparatus (e.g., varying the position of the setting screw 150, and thereby varying the extension distance of the distal end 152), causes the point at which the piston 120 will move from the closed position to the open position (or vice versa) to change. In other words, varying the extension distance causes a change in a displacement of the spring 123 required to seal or, as the case may be, unseal the sealing seat 128 from the sealing point 134. By changing this displacement, the pressure difference between the higher-pressure region 112 and lower-pressure region 114 required to compress the spring 123 also changes. Adjusting the setting screw 150 effectively changes the working length of the spring 123 such that the biasing force applied to the piston 120 by the spring 123 varies.

In other words, rotating the setting screw 150 to move it axially inside the threaded through-hole 142 varies the pressure of breathing gas released into the lower-pressure region 114.

Figure 2B shows the plunger 130 in the closed position, where the sealing point 134 is sealing against the sealing seat 128, thereby preventing gas flow through the neck 127 into the lower-pressure region 114. The distal end 152 of the setting screw 150 is extending out from the end cap face 144.

The pressure of breathing gas released from the first stage pressure reducer 10 into the lower-pressure region 114 must be careful set using the adjustable biasing apparatus (e.g., setting screw 150) during manufacturing. If the pressure is set too high, downstream components (e.g., a second stage pressure reducer) may not function correctly and/or may be damaged. If the pressure is set too low, downstream components may not be supplied with enough breathing gas to sustain a user. Generally, breathing gas introduced into the lower-pressure region 114 is at between 6-8 bar.

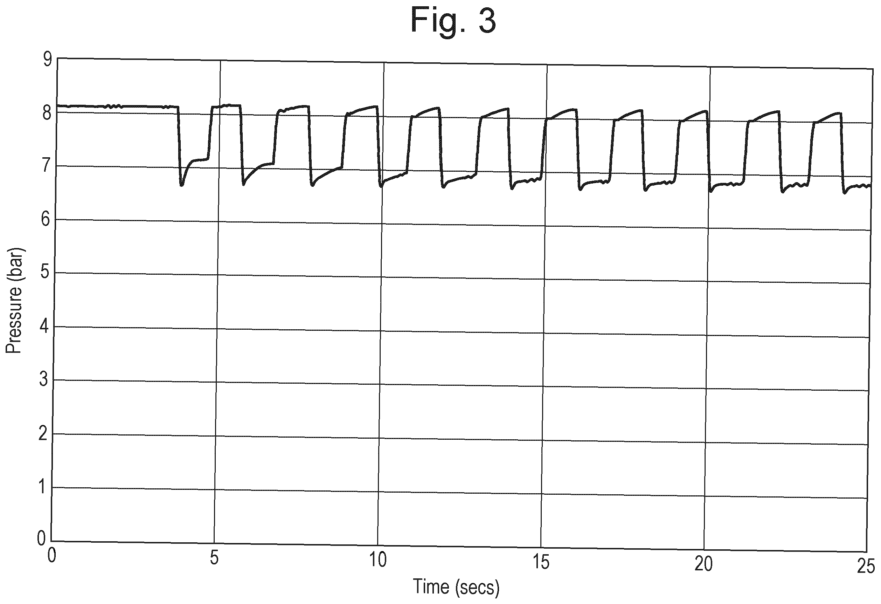

Figure 3 shows a graph of the pressure in the lower-pressure region 114 over time while a user is breathing through a second stage pressure reducer connected to the lower-pressure region 114. Initially, between 0 and approximately 3.5 seconds, the pressure is steady at just over 8 bar. Then, at around 3.5 seconds, the pressure sharply decreases to around 6.7 bar as the user inhales. In response to the drop in pressure, the piston 120 moves to the open position (Figure 2A), allowing breathing gas from the higher-pressure region 112 into the lower-pressure region 114. As a result, the pressure in the lower-pressure region 114 increases, returning back to the initial pressure of around 8 bar at around 5 seconds. At this point, the piston 120 moves to the closed position (Figure 2B). As shown, this cycle repeats similarly nine more times over the proceeding 20 seconds.

The approximately square wave oscillates between a higher pressure value (approximately 8.2 bar), which is known as the "static" pressure, and a lower pressure valve (approximately 6.6 bar), which is known as the "flow" pressure. The static pressure is the pressure inside the lower-pressure region 114 when the piston 120 is in the closed position and the user is not inhaling. The flow pressure is the pressure inside the lower-pressure region 114 when the piston 120 is in the open position and the user is inhaling.

Currently, techniques to set the outlet pressure of the first stage pressure reducer 10 rely on setting the static pressure. These techniques are referred to as "static setting" techniques.

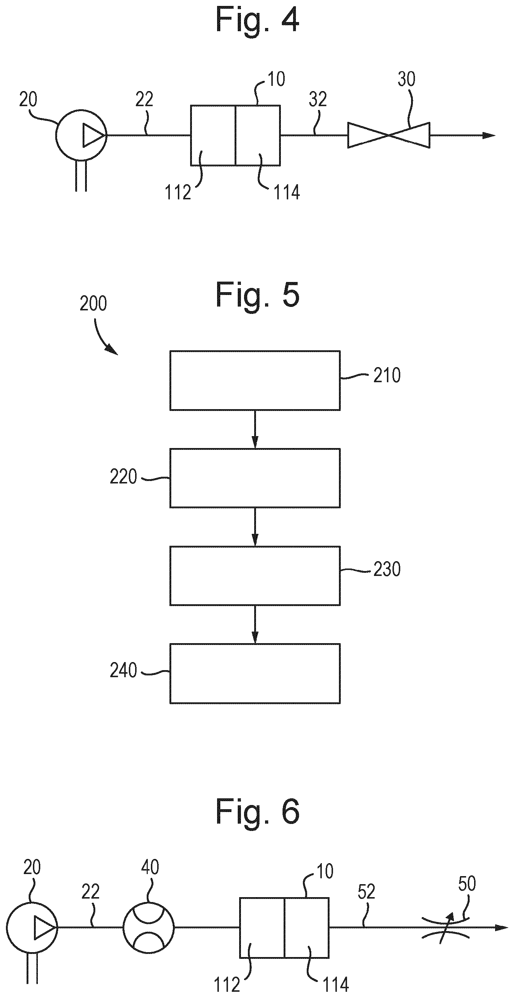

**Figure 4** shows a schematic diagram of an arrangement used to set the outlet pressure of first stage pressure reducer 10 using a static setting technique. First, the setting screw 150 is adjusted to an approximate (or guessed) position which may or may not be the correct position to set the outlet pressure as needed. A regulated breathing gas supply 20 then supplies breathing gas at, for example 300 bar, to the higher-pressure region 112 of the first stage pressure reducer 10 via a hose 22. The first stage pressure reducer 10 reduces the pressure of the supplied breathing gas down to around 7-8 bar. The output of the first stage pressure reducer 10 from the lower-pressure region 114 is fed into a gate valve 30 via a hose 32. Initially, the gate valve 30 is closed when the breathing gas supply 20 is opened. As a result, once the first stage pressure reducer 10 is supplied with higher-pressure breathing gas, the pressure in the hose 32 begins to build.

After a settling time of several seconds, the pressure in the hose 32 will have stabilised and is measured. The pressure in the hose 32 will have stabilised at a pressure corresponding to the static pressure of the first stage pressure reducer 10 (i.e., where the piston 120 has just moved to the closed position). If the measured pressure is within an acceptable range (e.g., at least 7 bar or between 7.1 bar and 7.5 bar), then the setting process is complete. However, if the measured pressure is not within an acceptable range, then the setting process continues. In such cases, the setting screw 150 is adjusted (e.g., tightened or loosened), then the pressure in the hose 32 is vented by opening then closing the gate valve 30. The pressure in the hose 32 is, again, allowed to settle, then measured again. The setting processes is repeated until the pressure in the hose 32 falls within the acceptable range.

Adjusting the static pressure (i.e., the pressure at which the piston 120 moves to the closed position) does not directly control the outlet pressure of breathing gas when breathing gas is flowing from the first stage pressure reducer 10. As noted above, this outlet pressure is referred to as the "flow" pressure. A general offset between the static pressure and the flow pressure in the closed and opened positions, respectively, can be estimated but the offset will vary depending on tolerances and variation of individual components. For example, slight differences in frictional forces in the first stage pressure reducer 10 can result in variations in the offset between the static pressure and the flow pressure. Once the setting screw 150 is positioned correctly using the static setting technique described above, the performance of the first stage pressure reducer 10 while breathing gas is flowing must be checked separately. In this case "performance" may correspond to the outlet (flow) pressure and/or the outlet flow rate. If the performance of the first stage pressure reducer 10 does not meet the necessary requirements during this secondary test, then the initial static pressure setting procedure must be repeated.

As will be appreciated, such static pressure setting techniques involves a significant level of trial and error, can be temperamental, and can therefore be very time consuming to perform.

**Figure** 5 shows a flowchart of an embodiment of a method according to the present invention. **The** method 200 is for setting the outlet (flow) pressure of the first stage pressure reducer 10 to a predetermined pressure at a predetermined flow rate. As noted above, the first stage pressure reducer 10 comprises the piston 120 and the plunger 130 which together act as the pressure reduction mechanism. As also noted above, the first stage pressure reducer 10 comprises an adjustable biasing apparatus in the form of the setting screw 150. **The** adjustable biasing apparatus is configured to adjustably apply a biasing force to the pressure reduction mechanism to vary the outlet pressure of the first stage pressure reducer 10.

**The** method 200 comprises supplying 210 an inlet gas flow to the first stage pressure reducer 10. **The** inlet gas flow may be supplied to an inlet of the first stage pressure reducer 10. **The** inlet may be in fluid communication with the higher-pressure region 112 such that gas supplied to the inlet is introduced into the higher-pressure region 112. **The** method 200 comprises restricting 220 an outlet gas flow of the first stage pressure reducer 10 to the predetermined pressure at the predetermined flow rate. That is, the outlet gas flow is restricted to a particular flow rate which necessarily restricts the outlet gas flow to a corresponding pressure (or vice versa). **The** method 200 comprises measuring 230 an inlet flow rate of the inlet gas flow. **The** method 200 comprises adjusting 240, using the setting screw 150, the outlet pressure of the first stage pressure reducer 10 until the measured inlet flow rate meets the predetermined flow rate.

Turning to Figure 6, a schematic diagram of an arrangement used with the method 200 is shown. As before, a regulated breathing gas supply 20 supplies breathing gas at, for example 300 bar, to the higher-pressure region 112 of the first stage pressure reducer 10 via a hose 22. The breathing gas is supplied via a flow meter 40 which can be used to measure the flow rate through the hose 22 into the first stage pressure reducer 10. The first stage pressure reducer 10 reduces the pressure of the supplied breathing gas down to around 7-8 bar. The output of the first stage pressure reducer 10 from the lower-pressure region 114 is fed into a restricting orifice 50 via a hose 52. The restricting orifice 50 restricts the flow rate therethrough to a predetermined flow rate at a predetermined pressure.

The outlet (i.e., "flow") pressure of the first stage pressure reducer 10 is set by adjusting the position of the setting screw 150 until the inlet flow rate measured by the flow meter 40 matches the predetermined flow rate. This results in the outlet pressure meeting the predetermined pressure (as will be described in more detail below).

In this embodiment, the restricting orifice 50 may comprise a circular opening, although other shapes are also applicable. The restricting orifice 50 comprises dimensions that correspond to the predetermined flow rate at the predetermined pressure. That is, the restricting orifice 50 comprises a cross-sectional area that permits breathing gas at a predetermined pressure to flow at a predetermined flow rate therethrough. The cross-sectional area of the restricting orifice 50 may be selected to match the desired outlet pressure of the first stage pressure reducer 10. In some embodiments, the restricting orifice 50 may comprise a cross-sectional area of around 4.5 mm². In such embodiment, the restricting orifice 50 may restrict breathing gas at a predetermined pressure of 6.55 bar to flow at a predetermined flow rate of 320 SLM therethrough. An outlet pressure of 6.55 bar may be the desired outlet pressure of the first stage pressure reducer 10.

Of course, the restricting orifice 50 does not restrict the outlet gas flow to the predetermined flow rate across all pressure values. Rather, the restricting orifice 50 only restrict the outlet gas flow rate to the predetermined flow rate when the outlet gas flow rate is at the predetermined pressure. As will be appreciated, pressure and flow rate are correlated. Thus, when the outlet gas flow rate is at a higher or lower pressure, the outlet gas flow will have a correspondingly and proportionally higher or lower pressure, respectively. However, if the outlet flow rate is confirmed to be at the predetermined flow rate, then the outlet gas flow pressure is also necessarily at the predetermined pressure.

By measuring the inlet flow rate with the flow meter 40 and by comparing measured inlet flow rate to the predetermined flow rate of the restricting orifice 50, a difference in flow rates can be established. This difference in flow rate corresponds to a difference in pressure of the outlet gas flow between the predetermined pressure and the current, true pressure of the outlet gas flow. The setting screw 150 can then be adjusted to vary the outlet gas flow pressure until the measured inlet flow rate meets the predetermined outlet flow rate.

It will be appreciated that it is possible to compare the values of the measured inlet flow rate and the predetermined outlet flow rate, even though they are at different pressures. This is because, each flow rate is represented in terms of standard litres per minute (SLM). In other words, the flow rates correspond to mass flow rates, rather than pressure-dependent volumetric flow rates. This decouples the flow rate from the current pressure of either the inlet gas flow or the outlet gas flow and allows a direct comparison to be made. It will also be appreciated that, as all of the breathing gas flowing through the flow meter 40 also flows through the restricting orifice 50, the mass flow rates at each point must always be equal.

Therefore, once the setting screw 150 is adjusted such that the measured inlet flow rate meets the predetermined flow rate, the outlet flow rate is necessarily also at the predetermined flow rate. As the restricting orifice 50 is designed to restrict the outlet flow rate to the predetermined pressure at the predetermined flow rate, the outlet gas flow is also necessarily at the predetermined pressure.

It will be appreciated that the method 200 does not require repeatably venting breathing gas by a gate valve 30 and waiting for the pressure to stabilise every time an adjustment to the setting screw 150 is made. Instead, by setting the "flow" pressure rather than the "static" pressure, the method 200 enables the setting screw 150 to be continuously adjusted until the correct position is reached.

In some embodiments, the regulated breathing gas supply 20 may supply breathing gas pressure at below 300-400 bar. For example, the regulated breathing gas supply 20 may supply breathing gas at 20 bar. By supplying breathing gas at a lower pressure, a less complex regulated breathing gas supply 20 may be required.

As will be appreciated, during use the first stage pressure reducer 10 is generally connected to a pressurised breathing gas cylinder. As the breathing gas inside the cylinder is depleted, the pressure of breathing gas supplied to the first stage pressure reducer 10 also decreases. The first stage pressure reducer 10 is generally designed to operate at a minimum supply pressure of around 20 bar. Therefore, by supplying breathing gas from the regulated breathing gas supply 20 at around 20 bar, the first stage pressure reducer 10 is more reliably set by the method 200 to operate correctly at its minimum operating pressure.

Furthermore, by supplying breathing gas from the regulated breathing gas supply 20 at a pressure below 300-400 bar (e.g., at 20 bar), the effects of adiabatic cooling are reduced. This minimises pressure variations caused by temperature fluctuations that could otherwise be introduced when performing the method 200.

In some embodiments, the method may comprise an additional step of measuring an outlet pressure of the outlet gas flow. The setting screw 150 may then also be adjusted such that the outlet pressure meets the predetermined pressure. This step may be regarded as a safety or secondary check to ensure that the setting screw 150 has been adjusted correctly.

In some embodiments, the method may comprise measuring the inlet flow rate a predetermined period of time after the inlet gas flow is first supplied to the first stage pressure reducer 10. By waiting a predetermined period of time before taking a measurement, any variations or transient disturbances in the inlet gas flow may dissipate and thus a 'steady state' flow may be achieved before the measurement is taken. The predetermined period of time may be, for example, at least 5, 10, 15, or 20 seconds.

In some embodiments, the inlet gas flow may be supplied from the regulated breathing gas supply 20 at a constant temperature, for example via a temperature controller or regulator. It will be appreciated that the pressure of a gas is correlated with its temperature. Therefore, by maintaining a constant temperature of the inlet gas flow, the variability in pressure caused by temperature fluctuations can be eliminated. The temperature controller may comprise a heater and/or a refrigeration circuit used to maintain a constant temperature of the inlet gas flow. The inlet gas flow may be supplied at 25°C.

In some embodiments, a thread-locking fluid or compound may be applied to the setting screw 150 before it is installed into the end cap 140. The thread-locking fluid/compound may prevent movement of the setting screw 150 once it has been set using the method 200.

It will be appreciated that the method 200 disclosed herein could be carried out manually, for example by quality control personnel on a production line. Equally, the method 200 could be a computer implemented method and/or may be carried out automatically.

The method 200 may be embodied on a computer-readable medium (e.g., a computer memory) which may be operative coupled to a processor. The processor may be configured to execute the method 200. The processor may be coupled to the regulated breathing gas supply 20 and/or to the flow meter 40 to control the flow of breathing gas through the first stage pressure reducer 10 and/or to measure the inlet flow rate. The processor may be coupled to an automatic adjustment mechanism. The automatic adjustment mechanism may engage the adjustable biasing apparatus (e.g., the setting screw 150) of the first stage pressure reducer 10 to automatically make adjustments thereto, for example based on data (e.g., an electrical signal) received from the flow meter 40 and indicative of the current inlet flow rate.

In this way, the setting of the outlet pressure of the first stage pressure reducer 10 could be automated to increase efficiency and reliability.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A method (200) for setting an outlet pressure of a first stage pressure reducer (10) to a predetermined pressure at a predetermined flow rate, the first stage pressure reducer (10) comprising a pressure reduction mechanism and an adjustable biasing apparatus configured to adjustably apply a biasing force to the pressure reduction mechanism to vary the outlet pressure of the first stage pressure reducer (10), the method (200) comprising:
supplying (210) an inlet gas flow to the first stage pressure reducer (10);
restricting (220) an outlet gas flow of the first stage pressure reducer (10) to the predetermined pressure at the predetermined flow rate;
measuring (230) an inlet flow rate of the inlet gas flow; and
adjusting (240), by the adjustable biasing apparatus, the outlet pressure of the first stage pressure reducer (10) until the measured inlet flow rate meets the predetermined flow rate.

2. The method (200) of any of the preceding claims, wherein the adjustable biasing apparatus comprises:
a spring (123) configured to apply the biasing force to the pressure reduction mechanism; and
a threaded element (150) configured to adjust a working length of the spring (123) to adjust the biasing force applied to the pressure reduction mechanism.

3. The method (200) of claim 2, wherein adjusting the outlet pressure of the first stage pressure reducer (10) comprises rotating the threaded element (150) to adjust the biasing force applied to the pressure reduction mechanism.

4. The method (200) of claim 2 or 3, further comprising an initial step of applying a thread-locking fluid to the threaded element (150) to prevent movement of the threaded element (150) once the outlet pressure of the first stage pressure reducer (10) is adjusted.

5. The method (200) of any of the preceding claims, wherein the outlet gas flow is restricted by a restricting orifice (50).

6. **The** method (200) of claim 5, wherein the restricting orifice (50) restricts the outlet gas flow of the first stage pressure reducer (10) to 320 SLM at a pressure of 6.55 bar, optionally wherein the restricting orifice (50) comprises a cross-sectional area of 4.5 mm².

7. **The** method (200) of any of the preceding claims, wherein a flow meter (40) is arranged between a source (20) of the inlet gas flow and the inlet of the first stage pressure reducer (10) to measure the inlet flow rate of the inlet gas flow.

8. **The** method (200) of any of the preceding claims, comprising:
measuring an outlet pressure of the outlet gas flow; and
adjusting, by the adjustable biasing apparatus, the outlet pressure of the first stage pressure reducer (10) until the outlet pressure meets the predetermined pressure.

9. The method (200) of any of the preceding claims, comprising measuring (230) the inlet flow rate a predetermined period of time after the inlet gas flow is first supplied to the first stage pressure reducer (10), optionally wherein the predetermined period of time is at least 5 seconds.

10. The method (200) of any of the preceding claims, wherein the inlet gas flow is supplied to the first stage pressure reducer (10) at a constant pressure, optionally wherein the inlet gas flow is supplied at 20 bar.

11. The method (200) of any of the preceding claims, wherein the inlet gas flow is supplied to the inlet of the first stage pressure reducer (10) at a constant temperature, optionally wherein the inlet gas flow is supplied at 25°C.

12. The method (200) of any of the preceding claims, wherein the inlet gas flow is treated by a temperature controller prior to being supplied to the inlet of the first stage pressure reducer (10), optionally wherein the temperature controller is a heater.

13. The method (200) of any of the preceding claims, wherein:
the predetermined pressure is between 6 bar and 7 bar, optionally between 6.5 bar and 6.6 bar; and/or
the predetermined flow rate is between 300 SLM and 400 SLM, optionally between 315 SLM and 325 SLM.

14. The method (200) of any of the preceding claims, wherein the pressure reduction mechanism comprises a plunger (130) and a piston (120), the piston (120) being displaceable between an open position in which a flow path is formed between the piston (120) and the plunger (130), and a closed position in which the piston (120) engages the plunger (130) to prevent flow therebetween.

15. A first stage pressure reducer (10) comprising a pressure reduction mechanism having an outlet pressure set according to the method (200) of any of the preceding claims.
